## Europäisches Patentamt
## European Patent Office
## Office européen des brevets

(11) Veröffentlichungsnummer: **0 301 991**
**A1**

# EUROPÄISCHE PATENTANMELDUNG

(21) Anmeldenummer: **88500076.0**

(51) Int. Cl.⁴: **G 03 B 17/24**

(22) Anmeldetag: **29.07.88**

(30) Priorität: **30.07.87 ES 8702250**

(43) Veröffentlichungstag der Anmeldung:
**01.02.89   Patentblatt   89/05**

(84) Benannte Vertragsstaaten:
**AT BE CH DE FR GB GR IT LI LU NL SE**

(71) Anmelder: **Rivero Prada, Juan**
**Paseo de la Castellana 180**
**E-28046 Madrid  (ES)**

(72) Erfinder: **Rivero Prada, Juan**
**Paseo de la Castellana 180**
**E-28046 Madrid  (ES)**

(54) **Verfahren zum Markieren der Fotografien.**

(57) Ein durchsichtiger Streifen mit einem besonderen Kennzeichen oder einer Darstellung wird seitlich zwischen Fallvorhang oder Absonderungsfläche des Verschlusses und dem Film aus sensiblem Material eingelegt. Die Identifizierung bleibt sichtbar seitlich der Negative.

FIGUR 3

Bundesdruckerei Berlin

EP 0 301 991 A1

## Beschreibung

### VERFAHREN ZUM MARKIEREN DER FOTOGRAFIEN

Der vorliegende Erteilungsantrag besteht aus einem "VERFAHREN ZUM MARKIEREN DER FOTOGRAFIEN", verwendbar für negative Filme zum Entwickeln auf Papier wie auch auf Dias. Dieses Verfahren bedeutet einen wichtigen technischen Fortschritt in der heutigen fotografischen Praxis.

In der Gegenwart, jeder mit Kamera ausgeführte Film begegnet beim anonymen Entwickeln im fotografischen Labor der Schwierigkeit im Fall von Verlorengehen oder Verwechslung der Entwicklungstasche. Diese Labors befinden sich in der Ungewissheit des Besitzers und müssen deshalb den Film bezahlen oder ersetzen.

Das beschriebene Verfahren in dieser Erfindung besteht im Drucken auf einer Seite des Negativs eines besonderen Kennzeichen oder grafischen Benennung des Besitzers der Kamera oder des Films zum entwickeln; dies kann der Name sein, der Familienname, der Name des fotografischen Studios wo er beschäftigt ist, usw. Dieses Zeichen oder Marke bleibt unverwischbar, als würden sie eine Einheit mit diesem Film bilden.

Zur Ausführung dieses Verfahren setzt man zwischen dem sensiblen Material oder Film und dem Fallvorhang oder Absonderungsfläche des Verschluss einen Streifen aus durchsichtigem Plastikmaterial in der Breite von höchstens einigen Milimetern, auf welchem der Name oder Kennzeichen aufgedruckt ist. Ist die Fotografie ausgeführt worden, d.h. beim Abdrücken des Auslösers, bleibt auf dem Negativ alles gedruckt, was sich vor ihm befindet, also das äussere Objekt zum fo tografieren und auch dieses gedruckte Kennzeichen, welches man auf einer Seite eingeschoben hat.

Wie man selber bestätigen kann, bleibt das Bedruckte unauslöschlich auf dem Negativ. Um es auszuwischen müsste man einen Teil der fertigen Aufnahme wegschneiden. Diese so ausgeführten Fotografien erlauben in jedem Moment den Behandlern der Entwicklungsfilme zu wissen, wer der Besitzer jener Filme ist, um so den unersetzlichen Verlust der Fotografien beim entwickeln zu verhüten.

Zur ausführlicheren Beschreibung dieser Erfindung, wird es nochmals aus einem Blatt mit Zeichnungen beigelegt, auf welchen man ein Beispiel ohne irgendeine Begrenzung in einer bevorzugten Darstellung ausgeführt hat.

Figur 1 stellt eine oberflächige Sicht der einfachen Konstruktion einer fotografischen Kamera dar.

Figur 2 stellt eine hintere Ansicht des Fallvorhangs oder Absonderungsfläche des Verschlusses dar und das bereitgestellte Element der Erfindung, wie auch ohne Fallvorhang oder Absonderungsfläche.

In Figur 3 sieht man einen negativen Film in welchen man das gedruckte Kennzeichen der Erfindung sieht.

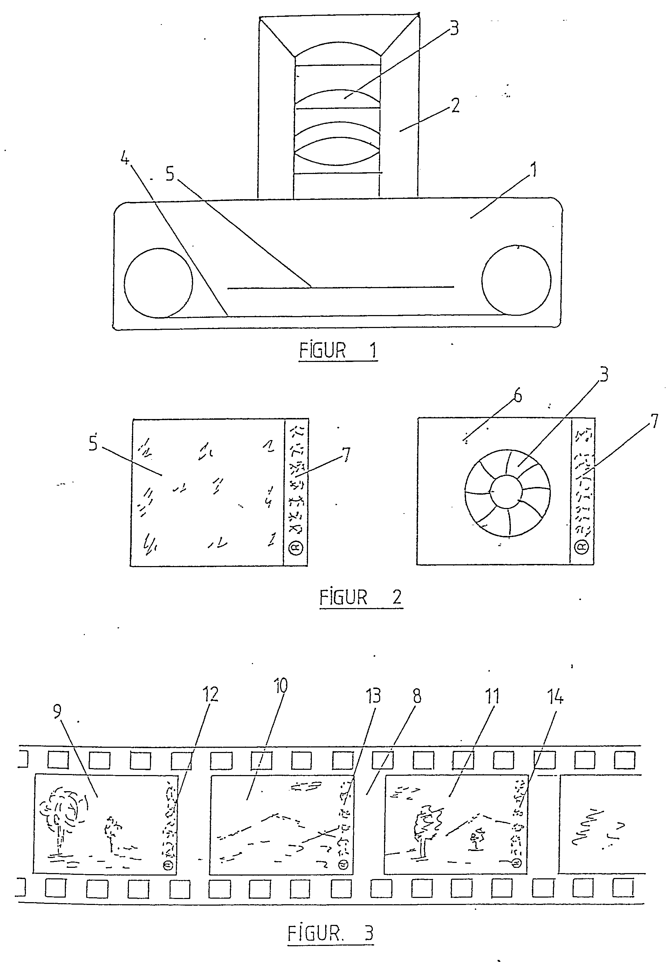

In der obengenannten Figur 1 sieht man an erster Stelle das Gehäuse der fotografischen Kamera 1, welches auf der Vorderseite das Objektiv 2 hat, welches sich aus einer Gruppe von Linsen 3 zusammensetzt, übereinstimmend mit der Vergrösserung und Belichtung erfordert für dieses Objektiv. Durch diese Linsen geht das Licht durch die Blende in das Innere der Kamera (nicht dargestellt), welche das Quantum des einfallenden Lichtes auf das Negativ reguliert. Dieses einfallende Licht wird das Innere der Kamera bis zum Film oder Negativ 4 durchqueren, und dazwischen stellt sich der Fallvorhang oder Absonderungsfläche des Verschluss 5, Regler der Geschwindigkeit oder Zeit der Beleuchtung der Fotografie. Also wäre zwischen jenen Fallvorhang oder Absonderungsflächen 5 und dem Film aus sensiblem Material 4 wo man auf einer Seite das Objekt der Erfindung dazwischenstellt, was sehr detaillierter in Figur 2 dargestellt wurde, wo man an erster Stelle den geschlossenen Fallvorhang oder Absonderungsfläche 5 beobachten kann, welchen in seiner Fortbewegung so wie bei 6 sieht, den Eintritt des Lichtes durch das Objektiv frei lässt 3.

In dieser Figur 2 kann man beobachten wie das Element der Erfindung unbeweglich auf einer Seite bleibt, wird also nicht durch den Fallvorhang oder Absonderungsfläche des Verschluss bewegt, sondern bleibt in einer verspäteten Stellung fest, und sobald sich der Fallvorhang oder Absonderungsfläche zurückzieht wird das äussere Licht das gedruckte Kennzeichen auf dem durchsichtigen Streifen auf das Negativ belichten.

In Figur 3 sieht man wie der Film 8 die Eindrücke der Fotografie 9, 10, 11, usw. bekommt, und in jeder kommt der bestimmte Inhalt (wie z.B. ein Portrait, eine Landschaft, usw.) vor, und in jedem Negativ kommt seitlich 12, 13 und 14 nur das besondere Kennzeichen vor, Objekt der Erfindung, also der Name des Fotografs, der Name des Studios, usw..

Was auch noch zu erwähnen wäre, dieses bestimmte Kennzeichen kann man rechts oder links, oben oder unten aufsetzen, wie man wünscht. Man muss auch bemerken, dass man dieses Kennzeichen bei jeder Art sensiblen Material verwenden kann, sei es für Filme für schwarz/weiss Bilder, Farbbilder oder Dias.

### Patentansprüche

Da die Beschreibung der vorliegenden Erfindung fertig ist, wollen wir feststellen und erklären, dass folgende Ansprüche neu und von eigener Erfindung sind:

1. Verfahren zum Markieren der Fotografien, kennzeichnend durch die Einschaltung eines seitlichen Streifens aus durchsichtigen Material zwischen dem Fallvorhang oder Absonderungsfläche des Verschluss einer Kamera und den negativen Film, auf welchen man ein besonderes lichtdichtes Kennzeichen abgedruckt hat, das alfabetisch oder numerisch sein kann. Dieses Kennzeichen bleibt auf einer Seite des Negativs gedruckt.

2. Verfahren zum Markieren der Fotografie nach Patentanspruch 1, welches sich auszeichnet weil das besondere Kennzeichen sich auf jeder Art sensiblen Material graviert, sei es schwarz/weiss, Farbfilm oder Dias.

3. Verfahren zum Markieren der Fotografien nach Patentanspruch 1, charakteristisch weil man das Kennzeichen der Erfindung an jeder Seite des Negativs anpassen kann.

4. Verfahren zum Markieren der Fotografien nach Patentanspruch 1 bis 3, charakteristisch weil der Streifen aus durchsichtigem Material auf welchem das Kennzeichen gedruckt ist eine Breite aus höchstens einigen Milimetern hat.

0301991

FIGUR 1

FIGUR 2

FIGUR. 3

## EINSCHLÄGIGE DOKUMENTE

EP 88500076.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B - 1 162 681 (ZEISS IKON AG)<br>* Ansprüche 3,4 *<br>-- | 1-4 | G 03 B 17/24 |
| A | DE - B - 1 194 245 (LEITZ)<br>* Spalte 1, Zeilen 38-52 *<br>-- | 1 | |
| A | US - A - 1 713 660 (KELLOGG)<br>-- | | |
| A | US - A - 4 678 301 (DENNER)<br>---- | | |

RECHERCHIERTE SACHGEBIETE (Int. Cl.4)

G 03 B 17/00

Der vorliegende Recherchenbericht wurde für alle Patentansprüche erstellt.

| Recherchenort | Abschlußdatum der Recherche | Prüfer |
|---|---|---|
| WIEN | 14-11-1988 | SCHMIDT |